# EUROPÄISCHE PATENTSCHRIFT

(11) **EP 1 810 096 B1**
(45) Veröffentlichungstag und Bekanntmachung des Hinweises auf die Patenterteilung: **15.06.2011**
(21) Anmeldenummer: 05797789.4
(22) Anmeldetag: 19.10.2005
(51) Int. Cl.: G05B 19/418

(54) **VERFAHREN ZUM AUSTAUSCHEN VON DATEN ZWISCHEN TEILNEHMERN AUS VERSCHIEDENEN NETZWERKEN**
METHOD FOR EXCHANGING DATA BETWEEN STATIONS FROM DIFFERENT NETWORKS
PROCEDE POUR ECHANGER DES DONNEES ENTRE DES TERMINAUX DE DIFFERENTS RESEAUX

(30) Priorität: 29.10.2004 DE 102004052555
(43) Veröffentlichungstag der Anmeldung: 25.07.2007
(73) Patentinhaber: Bosch Rexroth AG, 70184 Stuttgart (DE)
(72) Erfinder: SCHULTZE, Stephan, 97816 Lohr am Main (DE); RECKWELL, Jens, 97816 Lohr am Main (DE); GOLDBACH, Klaus, 97816 Lohr am Main (DE); ATZMÜLLER, Clemens, 97737 Gemünden (DE); REICK, Thilo, 97816 Lohr am Main (DE)
(86) Internationale Anmeldenummer: PCT/EP2005/011213
(87) Internationale Veröffentlichungsnummer: WO 2006/048118

(56) Entgegenhaltungen:
- WO-A-03/060617

## Beschreibung

Die Erfindung betrifft ein Verfahren zum Austauschen von Daten zwischen Teilnehmern bzw. Knoten aus echtzeitfähigen und nicht echtzeitfähigen Netzwerken, eine Vorrichtung, um dieses Verfahren durchzuführen, ein entsprechendes Computerprogramm sowie ein Computerprogrammprodukt.

### Stand der Technik

Die Bedeutung von Netzwerken oder Netzwerkdiensten ist in jüngster Zeit ständig gestiegen. Die Allgemeinheit richtet Ihre Interessen dabei mehr auf die Verwendung als Kommunikationsplattform, z.B. Internet, wohingegen im industriellen Umfeld auch Steuerungs- und Automatisierungssysteme untereinander vernetzt sind.

Man kann dabei allgemein echtzeitfähige und nicht echtzeitfähige Netzwerke unterscheiden. Bei nicht echtzeitfähigen Netzwerken werden die Daten im Netzwerk nach verfügbarer Kapazität übertragen. Der Datenaustausch weist aber keine Kontinuität und Periodizität auf, so dass auch die zu erwartenden Signallaufzeiten und Netzauslastungen schwer abgeschätzt werden können.

Im Unterschied dazu ist bei echtzeitfähigen Netzwerken ein deterministisches Zeitverhalten gegeben. Dies ermöglicht, Daten periodisch und innerhalb bestimmter Zeitintervalle zu übertragen, wie es beispielsweise für Abtastwerte in einem Regelungssystem notwendig ist.

Vor allem im Bereich der Steuerungs- und Automatisierungstechnik werden häufig nicht echtzeitfähige Netzwerke, beispielsweise Ethernet-Netzwerke, an die Computer angeschlossen sind, mit echtzeitfähigen Netzwerken, beispielsweise industriellen Feldbussen, verbunden.

Dabei dienen die nicht echtzeitfähigen Netzwerke häufig als überlagerte Systeme, die die Steuerung, Kontrolle, Diagnose, usw. der unterlagerten, echtzeitfähigen Netzwerke bzw. Systeme bereitstellen.

Zur Überwachung der Arbeitsabläufe bzw. allgemein der Ereignisse in den echtzeitfähigen Systemen ist es oftmals notwendig, die Daten dieser Systeme im überlagerten System miteinander in zeitliche Beziehung zu setzen, was aber aufgrund der fehlenden Echtzeitfähigkeit des überlagerten Systems im Stand der Technik nicht auf einfache Weise erfolgen kann.

Um dezentral erfasste Daten (z.B. Diagnoseinformationen, Datensampling usw.) zueinander in Beziehung zu setzen, werden herkömmlicherweise in einem überlagerten System zu den Diagnoseinformationen der jeweilig gültige Zeitstempel des überlagerten Systems zum Zeitpunkt des Dateneingangs hinzugefügt. Der Zeitstempel variiert mit der Übertragungsdauer der Daten bzw. mit der Geschwindigkeit der Erkennung eines aufgetretenen Diagnoseereignisses.

Als weitere Möglichkeit werden von einem überlagerten System die Zeitbasen der einzelnen unterlagerten Systeme, beispielsweise einmalig oder zyklisch, gesetzt. Die verteilte Zeitbasis ist dabei durch die Übertragungsdauer der Zeitinformation ungenau bzw. asynchron.

In der.WO 03/060617 A1 wird ein Mess-Netzwerk umfassend eine Anzahl von echtzeitfähigen Messbussystemen, die über ein nicht echtzeitfähiges Netzwerk verbunden sind, gezeigt. Die Messbussysteme sind zusätzlich zu den Antriebsbussystemen vorgesehen. Messdaten aus den unterschiedlichen Messbussystemen werden miteinander in Beziehung gesetzt, indem den Messdaten Zeitstempel hinzugefügt werden. Eine gemeinsame Zeitbasis für die Messbussysteme wird bereitgestellt, indem jeweils ein Messkopf in einem Messbussystem ein GPS-Signal empfängt. Diese Lösung ist sehr aufwendig.

In der US 5,774,377 wird ein Verfahren offenbart, bei dem Daten eines ersten Teilnehmers mit einem Zeitstempel versehen und in einem Puffer-Speicher des ersten Teilnehmers aufbewahrt werden, bis ein zweiter Teilnehmer, der mit dem ersten Teilnehmer eine synchronisierte Zeitbasis aufweist, ein Triggerereignis detektiert und dem ersten Teilnehmer den Zeitpunkt dieses Ereignisses mitteilt. Der erste Teilnehmer speichert daraufhin Daten, deren Zeitstempel in einem vorbestimmten Bereich um den Zeitpunkt des Triggerereignisses liegt, in einem Langzeitspeicher zur späteren Analyse ab.

Werden in einem gesteuerten Samplingverfahren (z.B. Oszilloskopfunktion) Daten von Teilnehmern aus unterlagerten Netzwerken erfasst, müssen alle diese Teilnehmer gleichzeitig getriggert werden, was aufgrund der nicht echtzeitfähigen Übertragung im überlagerten Netzwerk kaum möglich ist.

Ebenso schwierig bereitzustellen ist die Verknüpfung bzw. Kombination von gleichzeitigen Ereignissen, die bei verschiedenen Teilnehmern auftreten, an einer zentralen Stelle, wenn diese Stelle in einem nicht echtzeitfähigen Netzwerk liegt.

Soll beispielsweise diese Verknüpfung als Trigger für das Auslösen eines Vorganges im überlagerten System oder als Trigger für verschiedene Teilnehmer der unterlagerten Systeme dienen, besteht die Schwierigkeit darin, dass gleichzeitig auftretende Ereignisse in verschiedenen unterlagerten Netzwerken nicht gleichzeitig im überlagerten System erkannt werden und zueinander in Beziehung gesetzt werden können.

Vor diesem Hintergrund werden mit der vorliegenden Erfindung ein Verfahren zum Austauschen von Daten zwischen Teilnehmern aus verschiedenen Netzwerken und weiterhin eine Vorrichtung, die dieses Verfahren verwendet, gemäß den unabhängigen Patentansprüchen vorgestellt. Vorteilhafte Ausgestaltungen ergeben sich aus den jeweiligen Unteransprüchen und der nachfolgenden Beschreibung.

### Vorteile der Erfindung

Bei dem erfindungsgemäßen Verfahren zum Austauschen von Daten zwischen Teilnehmern bzw. Knoten aus wenigstens zwei echtzeitfähigen Netzwerken und wenigstens einem nicht echtzeitfähigen Netzwerk, wobei Daten, die in einem echtzeitfähigen Netzwerk erzeugt werden, ein Zeitstempel hinzugefügt wird, sind wenigstens zwei der echtzeitfähigen Netzwerke zueinander zeitsynchron. Dies ermöglicht auf einfache Weise, die Daten aus den zeitsynchronen Netzwerken untereinander in zeitliche Beziehung zu setzen.

Vorteilhafterweise werden die mit einem Zeitstempel versehenen Daten an einen Teilnehmer eines nicht echtzeitfähigen Netzwerkes übertragen. Dieser Teilnehmer erhält somit die einfache Möglichkeit, die erhaltenen Daten zeitbezogen zu verarbeiten oder auszuwerten.

Es ist von Vorteil, wenn bei dem erfindungsgemäßen Verfahren mit einem Zeitstempel versehene Daten von verschiedenen Sendern, insbesondere aus verschiedenen Netzwerken, vom Empfänger in eine zeitliche Beziehung zueinander gebracht werden.

Besonders bevorzugt ist die Ausgestaltung des erfindungsgemäßen Verfahrens, bei dem alle echtzeitfähigen Netzwerke zueinander zeitsynchron sind. Dies erlaubt, die direkte zeitliche Beziehung der Daten aller Teilnehmer der echtzeitfähigen Netzwerke zueinander.

In besonders vorteilhafter Weise wird das erfindungsgemäße Verfahren in Automatisierungssystemen, insbesondere Motion-Control-Systemen und Numerical-Control-Systemen, verwendet. Insbesondere in der Automatisierungstechnik erlaubt die Anwendung des beschriebenen Verfahrens eine steuerungs- bzw. teilnehmerübergreifende Echtzeitdatenerfassung. Dabei kann es sich beispielsweise um langfristig erfasste Diagnosedaten handeln, die zueinander in zeitliche Beziehung gesetzt werden, oder beispielsweise um kurzfristig erfasste Prozessdaten zur Fehlersuche mittels Logikanalyse oder Oszilloskopfunktionen.

Vorteilhafterweise werden Triggersignale verschiedener Teilnehmer, insbesondere aus verschiedenen Netzwerken, kombiniert bzw. verknüpft. Diese Verknüpfung kann beispielsweise durch die allgemein bekannten logischen Operatoren (UND, ODER, usw.) oder auf irgendeine andere Weise bewerkstelligt werden. Dies erlaubt die Überwachung netzwerkübergreifender Ereignisse.

Vorteilhafterweise wird die Kombination der Triggersignale als neues Triggersignal an Teilnehmer insbesondere aus verschiedenen Netzwerken, übertragen. Dies ermöglicht auf einfache Weise die Verwendung der Kombination auftretender Ereignisse zum Auslösen beliebiger vorbestimmbarer Arbeitsabläufe.

Besonders bevorzugt wird das erfindungsgemäße Verfahren in Automatisierungssystemen, insbesondere Motion-Control-Systemen und Numerical-Control-Systemen, verwendet. Dies erlaubt erstmalig die vorteilhafte steuerungs- bzw. teilnehmerübergreifende Kombination von Triggerereignissen.

Erfindungsgemäß wird eine Vorrichtung zum Austauschen von Daten zwischen Teilnehmern bzw. Knoten aus echtzeitfähigen und nicht echtzeitfähigen Netzwerken mit Mitteln zur Hinzufügung von Zeitstempeln zu Daten, die in einem echtzeitfähigen Netzwerk erzeugt werden, und Mitteln zur Bereitstellung einer Zeitsynchronität von echtzeitfähigen Netzwerken vorgeschlagen.

Es ist ebenso von Vorteil, wenn die erfindungsgemäße Vorrichtung auch Mittel zur Durchführung weiterer Verfahrensschritte gemäß einer bevorzugten Ausgestaltung des erfindungsgemäßen Verfahrens aufweist.

Die Vorrichtung weist vorteilhafterweise Mittel zur Kombination bzw. Verknüpfung von Triggersignalen verschiedener Teilnehmer, insbesondere aus verschiedenen Netzwerken, auf. Diese Vorrichtung kann ebenfalls bestehenden Netzwerken auf einfache Weise hinzugefügt werden.

In einer bevorzugten Ausgestaltung wird eine erfindungsgemäße Vorrichtung in Automatisierungssystemen, insbesondere Motion-Control-Systemen und Numerical-Control-Systemen, verwendet.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

### Figurenbeschreibung

Figur 1 zeigt eine schematische Darstellung eines Datenaustausches gemäß einer bevorzugten Ausführungsform des erfiridungsgemäßen Verfahrens;
Figur 2 zeigt eine schematische Darstellung der mittels der in Figur 1 beschriebenen Ausführungsform des Verfahrens erhaltenen Diagnosedaten; und
Figur 3 zeigt eine schematische Darstellung eines Datenaustausches gemäß einer anderen bevorzugten Ausführungsform des erfindungsgemäßen Verfahrens.

Nachfolgend wird im wesentlichen die vorteilhafte Verwendung des erfindungsgemäßen Verfahrens in Automatisierungssystemen, insbesondere Motion-Control-Systemen und Numerical-Control-Systemen, beschrieben, ohne dass das Verfahren auf diese Anwendung beschränkt ist.

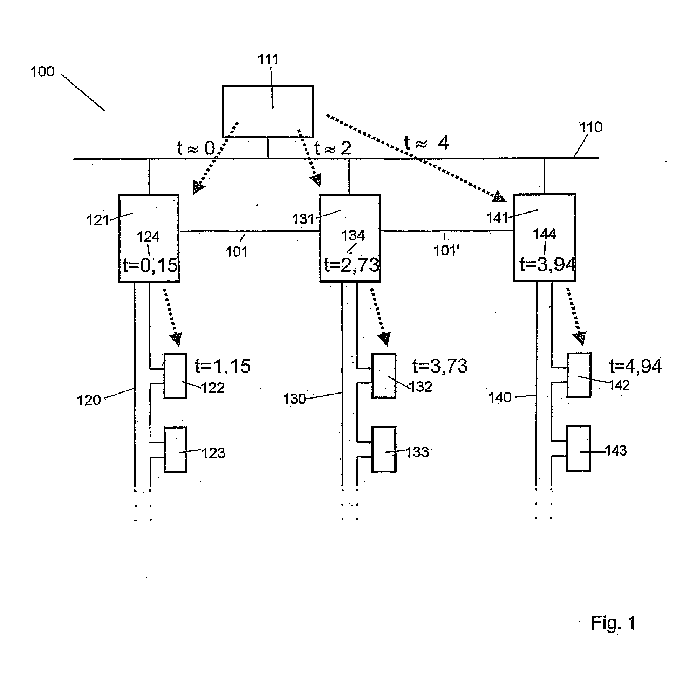

In Figur 1 ist ein Verbund verschiedener Netzwerke insgesamt mit 100 bezeichnet. Es ist ein überlagertes nicht echtzeitfähiges Netzwerk 110 mit drei unterlagerten echtzeitfähigen Netzwerken 120, 130, 140 verbunden. Die drei echtzeitfähigen Netzwerke 120, 130, 140 weisen eine gemeinsame Zeitbasis auf, die über eine echtzeitfähige Kommunikationsverbindung 101, 101' synchronisiert wird. Das nicht echtzeitfähige Netzwerk 110 weist einen Teilnehmer 111, beispielsweise einen PC, auf.

Die echtzeitfähigen Netzwerke 120, 130, 140 sind als Steuerungssysteme ausgebildet. Sie weisen jeweils eine Steuerung oder SPS 121, 131, 141 auf, an die jeweils weitere Teilnehmer 122, 123; 132, 133; 142, 143, beispielsweise Sensoren oder Aktoren, über echtzeitfähige Verbindungen angeschlossen sind.

Bei der Durchführung des Verfahrens ist nun die Triggerung der drei unterlagerten Systeme erwünscht, um Diagnosedaten abzufragen. Der PC 111 sendet das Triggersignal an die Steuerungen 121, 131, 141 über das nicht echtzeitfähige Netzwerk 110. Aufgrund der nicht echtzeitfähigen Verbindung ist die Laufzeit der Signale bis zum Erreichen der Steuerungen undeterminiert.

Sobald ein Triggersignal eine Steuerung 121, 131, 141 erreicht, beginnt diese Steuerung 121, 131, 141 mit der Datenaufzeichnung. Da die Laufzeit der Triggersignale vom PC 111 zu den Steuerungen 121, 131, 141 unterschiedlich ist, ist auch der Startzeitpunkt der Datenaufzeichnung unterschiedlich.

Die Steuerungen 121, 131, 141 versehen nun ihre Daten, beispielsweise zu Beginn der Messung, mit einem gültigen Zeitstempel 124, 134, 144. Da der zeitliche Ablauf einer Messung, im vorliegenden Beispiel eine Messung über zehn Zeiteinheiten, bekannt ist, kann der Zeitstempel 124, 134, 144 auch zu jedem anderen beliebigen Zeitpunkt, beispielsweise am Ende oder in der Mitte der Messung, hinzugefügt werden. Es versteht sich, dass ein Zeitstempel auch zu jeder Zeiteinheit zu den Daten hinzugefügt werden könnte.

Die Laufzeiten zwischen den einzelnen Teilnehmern 121, 122, 123; 131, 132, 133; 141, 142, 143 innerhalb eines Netzwerks 120, 130, 140 sind determiniert und bekannt. Im vorliegenden Beispiel beträgt die Laufzeit zwischen den einzelnen Teilnehmern genau eine Zeiteinheit.

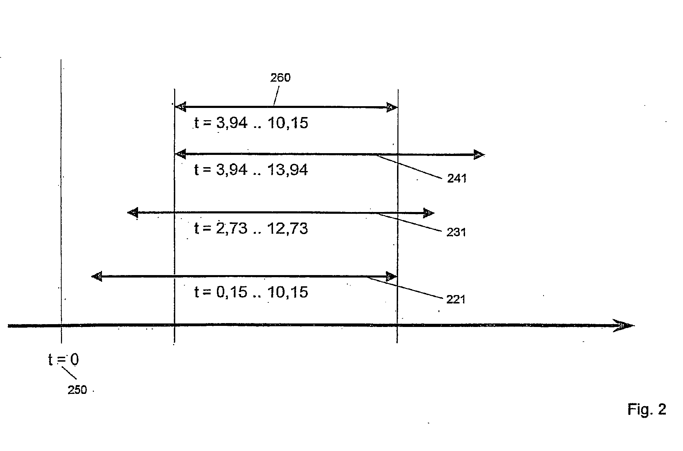

In Figur 2 ist das Ergebnis des in Figur 1 beschriebenen Verfahrens gezeigt. Es wurde eine Aufzeichnungsdauer von zehn Zeiteinheiten gewählt. Zum Zeitpunkt Null 250 werden die Triggersignale an die Steuerungen 121, 131, 141 gesendet. Daraufhin wird von den drei Steuerungen je ein Datensatz 221, 231, 241 über die Zeit t geliefert. Jeder Datensatz enthält wenigstens einen Zeitstempel. Aus diesem Zeitstempel ist der Startzeitpunkt und der Endzeitpunkt der Messung ersichtlich.

Der Datensatz 221 der ersten Steuerung 121 beginnt zum Zeitpunkt 0,15 Zeiteinheiten und endet zum Zeitpunkt 10,15 Zeiteinheiten. Der Datensatz 231 der zweiten Steuerung 131 beginnt zum Zeitpunkt 2,73 Zeiteinheiten und endet zum Zeitpunkt 12,73 Zeiteinheiten. Der Datensatz 241 der dritten Steuerung 141 beginnt zum Zeitpunkt 3,94 Zeiteinheiten und endet zum Zeitpunkt 13,94 Zeiteinheiten.

Die determinierten Zeitstempel ermöglichen, eine zeitliche Beziehung zwischen den einzelnen Datensätzen herzustellen. Aus dem dargelegten Beispiel kann ein überlappendes Zeitintervall 260 zwischen den Zeitpunkten 3,94 Zeiteinheiten und 10,15 Zeiteinheiten ermittelt werden. Während dieses Zeitintervalls 260 wurden die Messungen in den verschiedenen unterlegten Netzwerken gleichzeitig durchgeführt. Dieses Zeitintervall 260 kann vorteilhafterweise zur Auswertung der Daten verwendet werden.

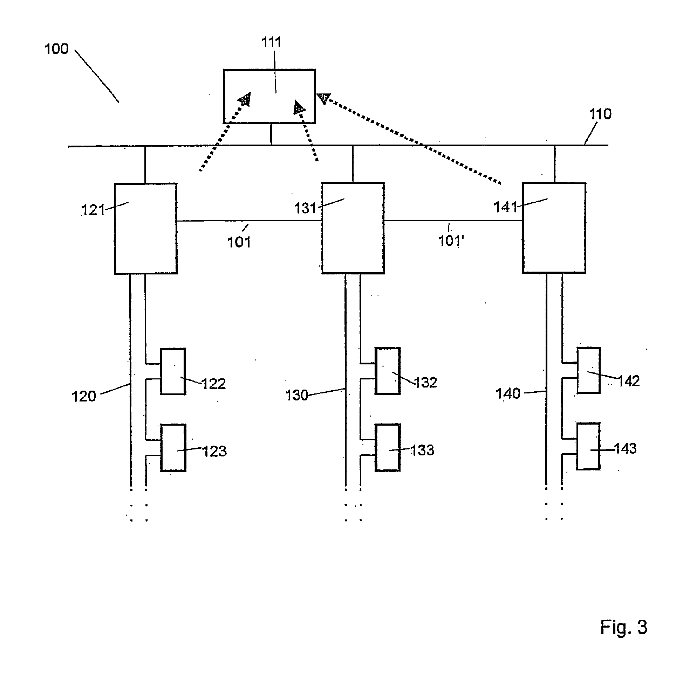

Figur 3 zeigt eine weitere bevorzugte Ausführungsform des erfindungsgemäßen Verfahrens.

Ein Verbund verschiedener Netzwerke ist insgesamt mit 100 bezeichnet. Es ist ein überlagertes nicht echtzeitfähiges Netzwerk 110 mit drei unterlagerten echtzeitfähigen Netzwerken 120, 130, 140 verbunden. Die drei echtzeitfähigen Netzwerke 120, 130, 140 weisen eine gemeinsame Zeitbasis auf, die über die echtzeitfähige Kommunikationsverbindung 101, 101' synchronisiert wird. Das nicht echtzeitfähige Netzwerk 110 weist einen Teilnehmer 111, beispielsweise einen PC, auf.

Die echtzeitfähigen Netzwerke 120, 130, 140 sind als Steuerungssysteme ausgebildet. Sie weisen jeweils eine Steuerung oder SPS 121, 131, 141 auf, an die jeweils weitere Teilnehmer 122, 123; 132, 133; 142, 143, beispielsweise Sensoren oder Aktoren, über echtzeitfähige Verbindungen angeschlossen sind.

Bei der Durchführung des Verfahrens ist nun das Feststellen einer vorbestimmten Verknüpfung mehrerer Triggerbedingungen aus verschiedenen Netzwerken erwünscht. Liegt eine Triggerbedingung in einem unterlagerten Netzwerk vor, wird sie an den PC 111 gemeldet. Der PC 111 kann nun bei Auftreten mehrerer Triggerereignisse in den verschiedenen Netzwerken 120, 130, 140 einen Zusammenhang herstellen und das Auftreten der vorbestimmten verknüpften Triggerbedingung feststellen.

Wird das Feststellen des gleichzeitigen Auftretens der Triggerereignisse gewünscht oder benötigt, kann das Triggerereignis mit einem Zeitstempel versehen und an den PC 111 gemeldet werden.

## Patentansprüche

1. Verfahren zum Austauschen von Daten zwischen Teilnehmern bzw. Knoten (111, 121, 122, 123, 131, 132, 133, 141, 142, 143) aus wenigstens zwei echtzeitfähigen, als Steuerungssysteme (120, 130, 140) ausgebildeten Netzwerken und wenigstens einem nicht echtzeitfähigen Netzwerk (110), wobei Daten, die in einem echtzeitfähigen Netzwerk (120, 130, 140) erzeugt werden, ein Zeitstempel hinzugefügt wird, wobei wenigstens zwei der echtzeitfähigen Netzwerke (120, 130, 140) zueinander zeitsynchron sind und eine gemeinsame Zeitbasis aufweisen, die über eine.echtzeitfähige Kommunikationsverbindung (101, 101') synchronisiert wird.

2. Verfahren nach Anspruch 1,
**dadurch gekennzeichnet, dass**
mit einem Zeitstempel versehene Daten an einen Teilnehmer (111) eines nicht echtzeitfähigen Netzwerkes (110) übertragen werden.

3. Verfahren nach einem der vorstehenden Ansprüche,
**dadurch gekennzeichnet, dass**
mit einem Zeitstempel versehene Daten von verschiedenen Sendern (121, 122, 123, 131, 132, 133, 141, 142, 143), insbesondere aus verschiedenen Netzwerken (120, 130, 140), vom Empfänger (111, 121, 122, 123, 131, 132, 133, 141, 142, 143) in eine zeitliche Beziehung (260) zueinander gebracht werden.

4. Verfahren nach einem der vorstehenden Ansprüche,
**dadurch gekennzeichnet, dass**
alle echtzeitfähigen Netzwerke (120, 130, 140) zueinander zeitsynchron sind.

5. Verfahren nach einem der vorstehenden Ansprüche,
**dadurch gekennzeichnet, dass**
es in Automatisierungssystemen, insbesondere Motion-Control-Systemen und Numerical-Control-Systemen, verwendet wird.

6. Verfahren nach einem der vorstehenden Ansprüche,
**dadurch gekennzeichnet, dass**
Triggersignale verschiedener Teilnehmer (111, 121, 122, 123, 131, 132, 133, 141, 142, 143), insbesondere aus verschiedenen Netzwerken (110, 120, 130, 140), kombiniert bzw. verknüpft werden.

7. Verfahren nach Anspruch 6,
**dadurch gekennzeichnet, dass**
die Kombination der Triggersignale als neues Triggersignal an Teilnehmer (111, 121, 122, 123, 131, 132, 133, 141, 142, 143), insbesondere aus verschiedenen Netzwerken (110, 120, 130, 140), übertragen wird.

8. Vorrichtung zum Austauschen von Daten zwischen Teilnehmern bzw. Knoten (111, 121, 122, 123, 131, 132, 133, 141, 142, 143) aus echtzeitfähigen, als Steuerungssysteme (120, 130, 140) ausgebildeten Netwerken und nicht echtzeitfähigen Netzwerken (110) mit
Mitteln zur Hinzufügung von Zeitstempeln zu Daten, die in einem echtzeitfähigen Netzwerk (120, 130, 140) erzeugt werden,
Mitteln zur Bereitstellung einer Zeitsynchronität von echtzeitfähigen Netzwerken (120, 130, 140) durch Synchronisation einer gemeinsamen Zeitbasis über eine echtzeitfähige Kommunikationsverbindung (101, 101').

9. Vorrichtung nach Anspruch 8 mit Mitteln zur Durchführung eines Verfahrens gemäß einem der Ansprüche 2 bis 7.

10. Vorrichtung nach Anspruch 8 oder 9
**gekennzeichnet durch**
Mittel zur Kombination bzw. Verknüpfung von Triggersignalen verschiedener Teilnehmer (111, 121, 122, 123, 131, 132, 133, 141, 142, 143), insbesondere aus verschiedenen Netzwerken (110, 120, 130, 140).

11. Vorrichtung nach einem der Ansprüche 8 bis 10 zur Verwendung in Automatisierungssystemen, insbesondere Motion-Control-Systemen und Numerical-Control-Systemen.

## Claims

1. Method for interchanging data between subscribers or nodes (111, 121, 122, 123, 131, 132, 133, 141, 142, 143) from at least two real-time-compatible networks in the form of control systems (120, 130, 140) and at least one non-real-time-compatible network (110), wherein data which are produced in a real-time-compatible network (120, 130, 140) have a time stamp added, wherein at least two of the real-time-compatible networks (120, 130, 140) are in sync with one another and have a common time base which is synchronized using a real-time-compatible communication link (101, 101').

2. Method according to Claim 1,
**characterized in that**
data provided with a time stamp are transmitted to a subscriber (111) in a non-real-time-compatible network (110).

3. Method according to one of the preceding claims,
**characterized in that**
data provided with a time stamp from different transmitters (121, 122, 123, 131, 132, 133, 141, 142, 143), particularly from different networks (120, 130, 140), are temporally related (260) to one another by the receiver (111, 121, 122, 123, 131, 132, 133, 141, 142, 143).

4. Method according to one of the preceding claims,
**characterized in that**
all the real-time-compatible networks (120, 130, 140) are in sync with one another.

5. Method according to one of the preceding claims,
**characterized in that**
it is used in automation systems, particularly motion control systems and numerical control systems.

6. Method according to one of the preceding claims,
**characterized in that**
trigger signals from different subscribers (111, 121, 122, 123, 131, 132, 133, 141, 142, 143), particularly from different networks (110, 120, 130, 140), are combined or linked.

7. Method according to Claim 6,
**characterized in that**
the combination of the trigger signals is transmitted as a new trigger signal to subscribers (111, 121, 122, 123, 131, 132, 133, 141, 142, 143), particularly from different networks (110, 120, 130, 140).

8. Apparatus for interchanging data between subscribers or nodes (111, 121, 122, 123, 131, 132, 133, 141, 142, 143) from real-time-compatible networks in the form of control systems (120, 130, 140) and non-real-time-compatible networks (110) having
means for adding time stamps to data which are produced in a real-time-compatible network (120, 130, 140),
means for providing synchronism for real-time-compatible networks (120, 130, 140) by synchronizing a common time base using a real-time-compatible communication link (101, 101').

9. Apparatus according to Claim 8 having means for performing a method according to one of Claims 2 to 7.

10. Apparatus according to Claim 8 or 9,
**characterized by**
means for combining or linking trigger signals from different subscribers (111, 121, 122, 123, 131, 132, 133, 141, 142, 143), particularly from different networks (110, 120, 130, 140).

11. Apparatus according to one of Claims 8 to 10 for use in automation systems, particularly motion control systems and numerical control systems.

## Revendications

1. Procédé d'échange de données entre des participants ou des noeuds (111, 121, 122, 123, 131, 132, 133, 141, 142, 143) d'au moins deux réseaux travaillant en temps réel et configurés comme systèmes de commande (120, 130, 140) et au moins un réseau (110) ne travaillant pas en temps réel, un tampon d'horloge étant ajouté aux données formées dans un réseau (120, 130, 140) travaillant en temps réel, au moins deux des réseaux (120, 130, 140) travaillant en temps réel étant synchronisés l'un par rapport à l'autre et présentant une base de temps commune qui est synchronisée par une liaison de communication (101, 101') travaillant en temps réel.

2. Procédé selon la revendication 1, **caractérisé en ce que** les données dotées d'un tampon d'horloge sont transmises à un participant (111) d'un réseau (110) ne travaillant pas en temps réel.

3. Procédé selon l'une des revendications précédentes, **caractérisé en ce que** les données dotées d'un tampon d'horloge et provenant de différents émetteurs (121, 122, 123, 131, 132, 133, 141, 142, 143), en particulier de réseaux (120, 130, 140) différents, sont mises en relation temporelle (260) les unes par rapport aux autres par le récepteur (111, 121, 122, 123, 131, 132, 133, 141, 142, 143).

4. Procédé selon l'une des revendications précédentes, **caractérisé en ce que** tous les réseaux (120, 130, 140) travaillant en temps réel sont synchronisés les uns par rapport aux autres.

5. Procédé selon l'une des revendications précédentes, **caractérisé en ce qu'**il est utilisé dans des systèmes d'automatisation, en particulier des systèmes de contrôle de déplacement et des systèmes de contrôle numérique.

6. Procédé selon l'une des revendications précédentes, **caractérisé en ce que** des signaux d'activation de différents participants (111, 121, 122, 123, 131, 132, 133, 141, 142, 143), en particulier de réseaux (110, 120, 130, 140) différents, sont combinés ou associés.

7. Procédé selon la revendication 6, **caractérisé en ce que** la combinaison des signaux d'activation est transmise comme nouveau signal d'activation à des participants (111, 121, 122, 123, 131, 132, 133, 141, 142, 143), en particulier de réseaux (110, 120, 130, 140) différents.

8. Dispositif d'échange de données entre des participants ou des noeuds (111, 121, 122, 123, 131, 132, 133, 141, 142, 143) de réseaux travaillant en temps réel, configurés comme systèmes de commande (120, 130, 140), et de réseaux (110) ne travaillant pas en temps réel, le dispositif présentant :
des moyens d'insertion d'un tampon d'horloge dans des données qui sont formées dans un réseau (120, 130, 140) travaillant en temps réel,
des moyens de réalisation d'une synchronisation entre les réseaux (120, 130, 140) travaillant en temps réel par synchronisation d'une base temporelle commune par l'intermédiaire d'une liaison de communication (101, 101') travaillant en temps réel.

9. Dispositif selon la revendication 8, présentant des moyens en vue de l'exécution d'un procédé selon l'une des revendications 2 à 7.

10. Dispositif selon les revendications 8 ou 9, **caractérisé par** des moyens de combinaison ou d'association de signaux d'activation de différents participants (111, 121, 122, 123, 131, 132, 133, 141, 142, 143), en particulier de réseaux (110, 120, 130, 140) différents.

11. Dispositif selon l'une des revendications 8 à 10, destiné à être utilisé dans des systèmes d'automatisation et en particulier dans des systèmes de contrôle de déplacement et des systèmes de contrôle numérique.
